# EUROPÄISCHE PATENTANMELDUNG

(11) **EP 1 705 804 A2**
(43) Veröffentlichungstag der Anmeldung: **27.09.2006**
(21) Anmeldenummer: 06101698.6
(22) Anmeldetag: 15.02.2006
(51) Int. Cl.: H04B 1/18

(54) **Funkwellen-Empfangseinrichtung**

(30) Priorität: 23.03.2005 DE 102005200134
(71) Anmelder: ROBERT BOSCH GMBH, 70442 Stuttgart (DE)
(72) Erfinder: Vogel, Guenter, 72760, Reutlingen (DE); Wittig, Rainer, 31249, Hohenhameln (DE); Arnold, Rainer, 31079, Sibbesse (DE); Schnitzer, Reiner, 72762, Reutlingen (DE)

(57) **Zusammenfassung**

Bei einer Funkwellen-Empfangseinrichtung (1) mit einer Hochfrequenzdämpfungseinheit (12) zur einstellbaren Dämpfung eines Antennenempfangssignals (A), einer Mischereinheit (6) zum Abmischen des gedämpften Antennenempfangssignals (A) auf eine Zwischenfrequenz in ein Zwischenfrequenzsignal (ZF) und mit einer Zwischenfrequenz-Pegeldetektionseinheit (10) zur Bestimmung der Empfangsfeldstärke des Antennenempfangssignals (A) aus dem Zwischenfrequenzsignal (ZF) ist die Hochfrequenzdämpfungseinheit (12) mit der Zwischenfrequenz-Pegeldetektionseinheit (10) zur Übertragung eines Därnpfungsfaktorsignals, das die Dämpfung des Antennenempfangssignals (A) beschreibt, verbunden und die Zwischenfrequenz-Pegeldetektionseinheit (10) ist zur Bestimmung der Empfangsfeldstärke in Abhängigkeit von dem Signalpegel des Zwischenfrequenzsignals (ZF) und dem Dämpfungsfaktorsignal ausgebildet.

## Beschreibung

Die Erfindung betrifft eine Funkwellen-Empfangseinrichtung mit einer Hochfrequenzdämpfungseinheit zur einstellbaren Dämpfung eines Antennenempfangssignals, einer Mischereinheit zum Abmischen des gedämpften Antenneneingangssignals auf eine Zwischenfrequenz in ein Zwischenfrequenzsignal und mit einer Zwischenfrequenz-Pegeldetektionseinheit zur Bestimmung der Empfangsfeldstärke des Antennenempfangssignals aus dem Zwischenfrequenzsignal.

In herkömmlichen Funkwellen-Empfangseinrichtungen, insbesondere in Radioempfängem gelangt das Empfangssignal von einer Antenne über eine Hochfrequenz-Vorselektion an den Eingang eines Mischers, in dem das vorselektierte, d. h. bandpassgefilterte und gegebenenfalls bedämpfte Antennen-Empfangssignal mit einem Oszillatorsignal in die Zwischenfrequenzebene auf eine Zwischenfrequenz gemischt wird. Das Zwischenfrequenzsignal wird dann nach einer Bandpassfilterung mit einem Zwischenfrequenzfilter zum einen an einen Demodulator, in welchem die Nutzinformation wieder gewonnen wird, und zum anderen an einen Zwischenfrequenz-Pegeldetektor weitergeleitet. In diesem wird aus dem Zwischenfrequenzsignal eine der Empfangsfeldstärke entsprechende Gleichspannung gewonnen, die einem Mikroprozessor oder Mikrocontroller entweder analog oder bereits digital gewandelt zur weiteren Bewertung zugeführt wird. Ein Analogsignal kann beispielsweise in einem Analog/Digital-Wandler des Mikroprozessors oder Mikrocontrollers in ein digitales Signal umgewandelt werden.

Die im Zwischenfrequenz-Pegeldetetor erzeugte Gleichspannung folgt dem Antennensignalpegel proportional solange, bis der Schwellwert einer automatischen Gainsteuerung für das vorselektierte hochfrequente Antennenempfangssignal zur Steuerung einer Hochfrequenz-Dämpfungseinheit erreicht wird. Nach Überschreiten des Schwellwerts wird bei weiter steigendem Antennensignalpegel durch die automatische Gainsteuerung ein Gleichstrom in Abhängigkeit des Antennensignalpegels durch die Hochfrequenzdämpfungseinheit getrieben, die beispielsweise ein PIN-Diodendämpfungsglied und einen damit verbundenen HF-Vorselektionsfilter haben kann. Hierdurch wird das Antennenempfangssignal in der Hochfrequenz-Dämpfungseinheit zur Vorselektion soweit bedämpft, dass der Signalpegel am Mischereingang auf den Schwellwert der automatischen Gainsteuerung begrenzt wird, um eine Übersteuerung des Mischers zu verhindern. Dies führt dazu, dass Antenneneingangssignalpegel, die oberhalb des Einsatzpunktes der automatischen Gainsteuerung des vorselektierten HF-Antennenempfangssignals liegen, einen konstanten Mischereingangspegel und somit auch einen konstanten Zwischenfrequenzsignalpegel liefern. Dadurch kann eine Bewertung von Antenneneingangssignalpegeln oberhalb des Einsatzpunktes der automatischen Gainsteuerung nicht mehr erfolgen, da der ZF-Pegeldetektor nur noch eine konstante Gleichspannung liefert.

Weiterhin kann durch starke Nachbarkanäle, die aufgrund der hohen Bandbreite der Hochfrequenz-Vorselektion an den Mischereingang gelangen, die automatische Gainsteuerung aktiviert werden, wodurch ein schwacher Nutzkanal ebenfalls abgeregelt wird und somit im Zwischenfrequenz-Pegeldetektor eine falsche Empfangsfeldstärke des Nutzsignals detektiert wird.

Aufgabe der Erfindung ist es daher, eine verbesserte Funkwellen-Empfangseinrichtung zu schaffen, bei der die oben genannten Probleme behoben sind.

Die Aufgabe wird mit der gattungsgemäßen Funkwellen-Empfangseinrichtung erfindungsgemäß dadurch gelöst, dass die Hochfrequenz-Dämpfungseinheit mit der Zwischenfrequenz-Pegeldetektionseinheit zur Übertragung eines Dämpfungsfaktorsignals, das die Dämpfung des Antennenempfangssignals beschreibt, verbunden ist und die Zwischenfrequenz-Pegeldetektionseinheit zur Bestimmung der Empfangsfeldstärke in Abhängigkeit von dem Signalpegel des Zwischenfrequenzsignals und dem Dämpfungsfaktorsignal ausgebildet ist.

Durch die Bestimmung der Empfangsfeldstärke nicht nur in Abhängigkeit von der Zwischenfrequenzsignalstärke, sondern auch zusätzlich in Abhängigkeit von dem Dämpfungsfaktorsignal zur Ansteuerung der HF-Vorselektion des HF-Antennenempfangssignals werden nunmehr auch die Auswirkungen der Einflüsse einer Hochfrequenz-Vorselektion des HF-Empfangssignals im Hochfrequenzkreis bewertet. Insbesondere kann trotz Bedämpfung des Antennenempfangssignals eine tatsächlich am Antenneneingang empfangbare Empfangsfeldstärke festgestellt werden.

Hierzu kann die Hochfrequenz-Vorselektionseinheit beispielsweise einen einstellbaren Hochfrequenz-Vorselektionsfilter für das Antennenempfangssignal, eine automatische Gainsteuerung, d. h. eine automatische Verstärkungsregelung, am Ausgang des Hochfrequenz-Vorselektionsfilters und ein von der automatischen Gainsteuerung angesteuertes und mit dem HF-Vorselektionsfilter zur Bedämpfung des Antennenempfangssignals verbundenes Dämpfungsglied haben. Eine Messeinheit am Ausgang der automatischen Gainsteuerung, beispielsweise ein Strommesser in dem HF-Regelzweig, ist hierbei zur Erfassung eines Dämpfungsregelungssignals vorgesehen. Die Messeinheit ist mit der Zwischenfrequenz-Pegeldetektionseinheit zur Übertragung des Dämpfungsregelungssignals als Dämpfungsfaktorsignal direkt oder indirekt verbunden.

Die Messeinheit hat vorzugsweise eine Strommesseinrichtung und einen Messwertaufnehmer für das gemessene Stromsignal. Die Dämpfung des Eingangssignals in dem HF-Vorselektionsfilter durch das Dämpfungsglied ist nämlich abhängig von dem durch das Dämpfungsglied und somit durch den Strommesser fließenden Gleichstrom, dessen Wert durch den Messwertaufnehmer erfasst und an eine ZF-Pegeldetektionseinheit, beispielsweise einen Mikroprozessor oder Mikrocontroller, zur Bestimmung der Empfangsfeldstärke des Nutzsignals weiter gegeben wird.

Die Hochfrequenzdämpfungseinheit hat hierzu vorzugsweise ein stromgesteuertes PIN-Diodendämpfungsglied.

Am Ausgang der Mischereinheit ist vorzugsweise ein Zwischenfrequenzfilter vorgesehen, wobei die Zwischenfrequenz-Pegeldetektionseinheit zur Bestimmung der Empfangsfeldstärke an den Ausgang des Zwischenfrequenzfilters geschaltet ist. Dabei kann die ZF-Pegeldetektionseinheit einen mit einem Mikroprozessor verbundenen ZF-Pegeldetektor haben. Der Mikroprozessor ist dann zur Ermittlung der Empfangsfeldstärke des Antennenempfangssignals aus dem Ausgangssignal des Zwischenfrequenz-Pegeldetektors und dem Dämpfungsfaktorsignal vorgesehen.

Das Ausgangssignal des ZF-Pegeldetektors und/oder Dämpfungsfaktorsignal kann analog sein. Dabei kann die Analog-Digital-Wandlung des analogen Ausgangssignals und/oder Dämpfungsfaktorsignals durch einen Analog-Digital-Wandler des Mikroprozessors der ZF-Pegeldetektionseinheit erfolgen.

Der ZF-Pegeldetektor und/oder die Vorfrequenzdämpfungseinheit kann aber auch einen Analog-Digital-Wandler zur Umwandlung des analogen Zwischenfrequenz-Signalstärkesignals und/oder Dämpfungsfaktorsignals haben.

Die Erfindung wird nachfolgend anhand der beigefügten Zeichnungen beispielhaft näher erläutert. Es zeigen:
Figur 1 - Blockdiagramm einer ersten Ausführungsform der Funkwellen-Empfangseinrichtung;
Figur 2 - eine abgewandelte zweite Ausführungsform der Funkwellen-Empfangseinrichtung mit Summierstufe.

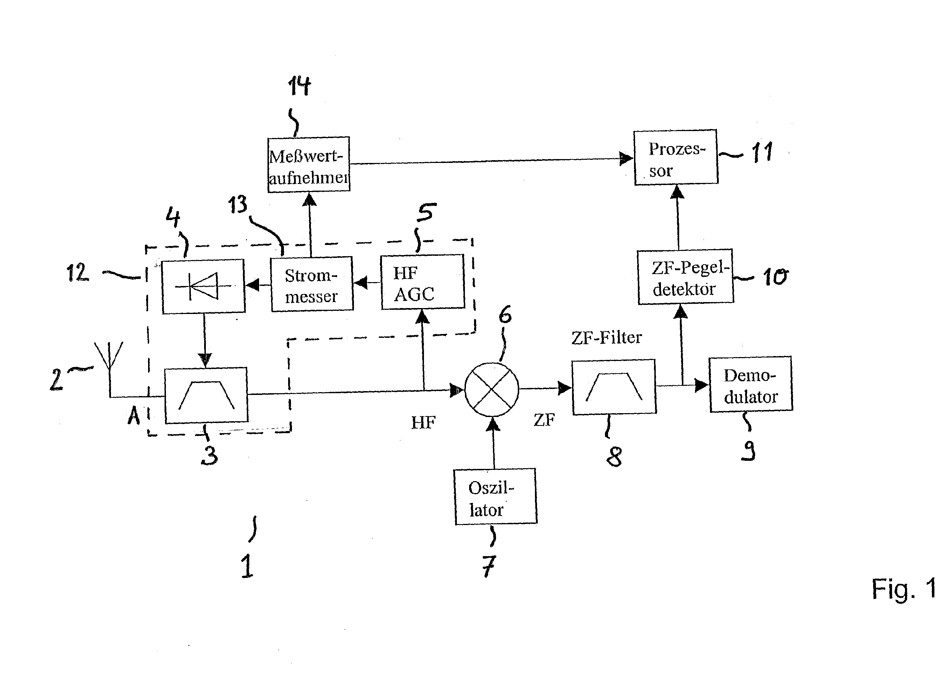

Die Figur 1 lässt ein Blockdiagramm einer Funkwellen-Empfangseinrichtung 1 mit einer Antenne 2 für den Empfang eines Antennenempfangssignals A erkennen. Das hochfrequente Antennenempfangssignal A wird mit einem Hochfrequenz-Bandpassfilter 3 vorselektiert. Beispielsweise wird mit dem HF-Bandpassfilter 3 ein Rundfunkantennensignal mit einem Frequenzbereich selektiert, für den die Funkwellen-Empfangseinrichtung ausgelegt ist. Das HF-Bandpassfilter 3 wird mit einem PIN-Diodendämpfungsglied 4 geregelt, wobei das PIN-Diodendämpfungsglied 4 von einer automatischen Gainsteuerung HF-AGC 5 angesteuert wird, die nach Überschreitung eines Signalpegels des vorselektierten HF-Antennenempfangssignals einen Gleichstrom in Abhängigkeit des Signalpegels des Antennenempfangssignals A durch das PIN-Diodendämpfungsglied 4 treibt. Hierdurch wird das Antennenempfangssignal A in dem HF-Bandpassfilter 3 soweit bedämpft, dass der Signalpegel des vorselektierten hochfrequenten Antennenempfangssignals am Eingang eines Mischers 6 auf den Schwellwert der automatischen Gainsteuerung AGC 5 begrenzt wird. Hierdurch wird eine Übersteuerung des Mischers 6 verhindert.

In den Mischer 6 wird das vorselektierte Antennenempfangssignal HF mit einem Oszillatorsignal eines Oszillators 7 in die Zwischenfrequenzebene in ein Zwischenfrequenzsignal ZF gemischt. Das Zwischenfrequenzsignal ZF wird dann über ein Zwischenfrequenzfilter 8 an einen Demodulator 9 weitergeleitet, in dem die Nutzinformation aus dem Zwischenfrequenzsignal ZF gewonnen wird. Das gefilterte Zwischenfrequenzsignal wird weiterhin zu einem Zwischenfrequenz-Pegeldetektor 10 geleitet, in dem aus dem Zwischenfrequenzsignal ZF eine der Empfangsfeldstärke entsprechende Gleichspannung gewonnen wird. Diese wird einem Mikroprozessor 11 entweder analog oder bereits digital gewandelt zur weiteren Bewertung zugeführt. Für den Fall, dass der Mikroprozessor 11 ein Analogsignal erhält, erfolgt eine Analog-Digital-Wandlung in einem Analog-Digital-Wandler des Mikroprozessors 11.

Aufgrund der Begrenzung des Signalpegels des Antennenempfangssignals A durch die Hochfrequenzdämpfungseinheit 12, die aus dem HF-Bandpassfilter 3, der automatischen Gainsteuerung 5 und dem PIN-Diodendämpfungsglied 4 gebildet ist, führen Signalpegel des Antennenempfangssignals A oberhalb des Einsatzpunktes der automatischen Gainsteuerung 5 zu einem konstanten Mischereingangspegel und damit auch zu einem konstanten Zwischenfrequenzsignalpegel. D. h., dass der Zwischenfrequenzpegeldetektor 10 oberhalb des Einsatzpunktes der automatischen Gainsteuerung 5 nur noch eine konstante Gleichspannung liefert. Zudem kann die Dämpfung des Antennenempfangssignals A auch durch starke Nachbarkanäle aktiviert werden, die aufgrund der hohen Bandbreite der HF-Vorselektion an dem Eingang des Mischers 6 gelangen. Damit ist es möglich, dass ein schwacher Nutzkanal ebenfalls abgeregelt wird und im Zwischenfrequenz-Pegeldetektor 10 eine falsche Empfangsfeldstärke des Zwischenfrequenzsignals ZF detektiert wird.

Es wird daher eine Strommesseinrichtung 13 zwischen die automatische Gainsteuerung 5 und das PIN-Diodendämpfungsglied 4 geschaltet. Das Strommessgerät 13 misst den von der automatischen Gainsteuerung 5 bei Überschreiten eines Schwellwerts generierten Gleichstroms, der von dem Signalpegel des Antennenempfangssignals A abhängig ist. Der Strommesser 13 ist mit einem Messwertaufnehmer 14 zur Erfassung des durch das Strommessgerät 13 fließenden Gleichstroms verbunden. Der von dem Messwertaufnehmer 14 erfasste Stromwert wird an den Mikroprozessor 11 weitergeleitet, um den tatsächlichen Eingangssignalpegel in Abhängigkeit von der durch den Zwischenfrequenz-Pegeldetektor 10 detektierten Zwischenfrequenzsignalstärke und dem von der automatischen Gainsteuerung 5 zur Dämpfung des Antennenempfangssignals A generierten Stroms als Dämpfungsfaktorsignal zu bestimmen.

Die Abhängigkeit der Empfangsfeldstärke von dem Dämpfungsfaktorsignal und der Zwischenfrequenzsignalstärke kann beispielsweise in einer Tabelle im Mikroprozessor 11 abgelegt werden.

Die im Zwischenfrequenz-Pegeldetektor 10 erzeugte Feldstärkespannung entspricht der Empfangsfeldstärke des Antennenempfangssignals A abzüglich der Dämpfung in der Hochfrequenzdämpfungseinheit 12. Da die Dämpfung durch Messung des von der automatischen Gainsteuerung 5 generierten und durch das PIN-Diodendämpfungsglied 4 fließenden Stroms bekannt ist, kann durch Verknüpfung der Messgrößen aus dem ZF-Pegeldetektor 10 und dem Messwertaufnehmer 14 im Mikroprozessor 11 die tatsächliche Empfangsfeldstärke des Nutzsignals ermittelt werden.

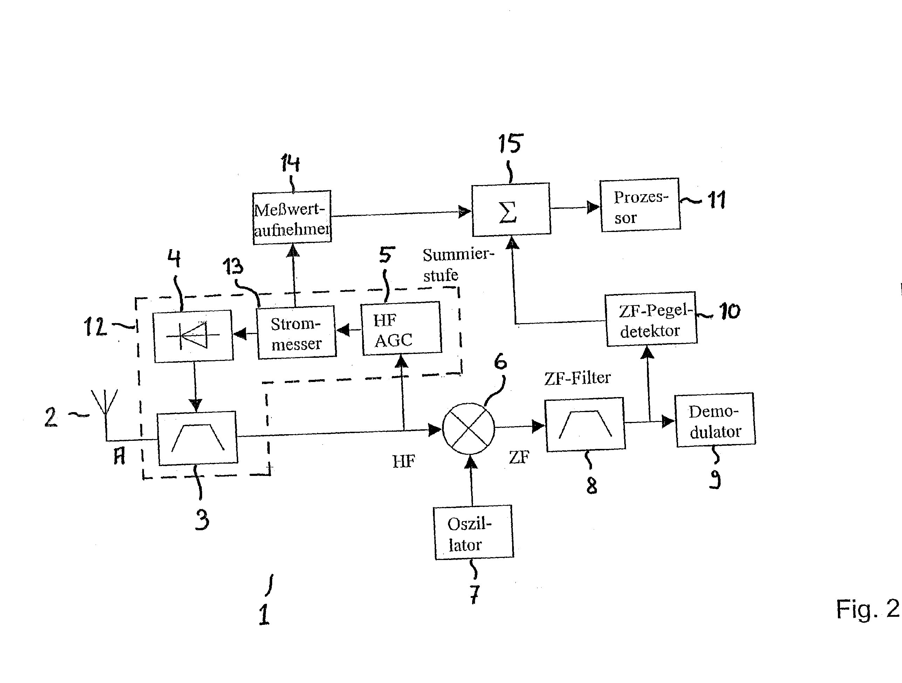

Die Figur 2 zeigt eine abgewandelte Ausführungsform der Funkwellen-Empfangseinrichtung 1 aus Figur 1. Hierbei ist eine analoge Summierstufe 15 vorgesehen, mit der die analogen Messgrößen aus dem Zwischenfrequenz-Pegeldetektor 10 und dem Messwertaufnehmer 14 addiert werden. Damit steht als Ergebnis ein analoges Summensignal zur Verfügung, das entweder analog einem Analog-Digital-Wandler des Mikroprozessors 11 oder bereits digital gewandelt an dem Mikroprozessor 11 zur Bestimmung der Empfangsfeldstärke des Nutzsignals weitergeleitet wird.

## Patentansprüche

1. Funkwellen-Empfangseinrichtung (1) mit einer Hochfrequenzdämpfungseinheit (12) zur einstellbaren Dämpfung eines Antennenempfangssignals (A), einer Mischereinheit (6) zum Abmischen des gedämpften Antennenempfangssignals (A) auf eine Zwischenfrequenz in ein Zwischenfrequenzsignal (ZF) und mit einer Zwischenfrequenz-Pegeldetektionseinheit (10) zur Bestimmung der Empfangsfeldstärke des Antennenempfangssignals (A) aus dem Zwischenfrequenzsignal (ZF), **dadurch gekennzeichnet, dass** die Hochfrequenzdämpfungseinheit (12) mit der Zwischenfrequenz-Pegeldetektionseinheit (10) zur Übertragung eines Dämpfungsfaktorsignals, das die Dämpfung des Antennenempfangssignals (A) beschreibt, verbunden ist und die Zwischenfrequenz-Pegeldetektionseinheit (10) zur Bestimmung der Empfangsfeldstärke in Abhängigkeit von dem Signalpegel des Zwischenfrequenzsignals (ZF) und dem Dämpfungsfaktorsignal ausgebildet ist.

2. Funkwellen-Empfangseinrichtung (1) nach Anspruch 1, **dadurch gekennzeichnet, dass** die Hochfrequenzdämpfungseinheit (12) einen einstellbaren Hochfrequenz-Vorselektionsfilter für das Antennenempfangssignal (A), eine automatische Gainsteuerung (Automatic Gain Control - AGC) am Ausgang des Hochfrequenz-Vorselektionsfilters und ein von der automatischen Gainsteuerung (AGC) angesteuertes und mit dem Hochfrequenz-Vorselektionsfilter zur Bedämpfung des Antennenempfangssignals (A) verbundenes Dämpfungsglied hat, wobei eine Messeinheit am Ausgang der automatischen Gainsteuerung (AGC) zur Erfassung eines Dämpfungsregelungssignals vorgesehen ist und die Messeinheit mit der Zwischenfrequenz-Pegeldetektionseinheit (10) zur Übertragung des Dämpfungsregelungssignals als Dämpfungsfaktorsignal verbunden ist.

3. Funkwellen-Empfangseinrichtung (1) nach Anspruch 2, **dadurch gekennzeichnet, dass** die Messeinheit eine Strommesseinrichtung (13) und einen Messwertaufnehmer (14) für das gemessene Stromsignal hat.

4. Funkwellen-Empfangseinrichtung (1) nach einem der vorhergehenden Ansprüche, **dadurch gekennzeichnet, dass** die Hochfrequenzdämpfungseinheit (12) ein stromgesteuertes PIN-Dioden-Dämpfungsglied (4) hat.

5. Funkwellen-Empfangseinrichtung (1) nach einem der vorhergehenden Ansprüche, **dadurch gekennzeichnet, dass** an dem Ausgang der Mischereinheit (6) ein Zwischenfrequenzfilter (8) vorgesehen ist und die Zwischenfrequenz-Pegeldetektionseinheit (10) an den Ausgang des Zwischenfrequenzfilters (8) geschaltet ist.

6. Funkwellen-Empfangseinrichtung (1) nach einem der vorhergehenden Ansprüche, **dadurch gekennzeichnet, dass** die Zwischenfrequenz-Pegeldetektionseinheit (10) einen mit einem Prozessor verbundenen Zwischenfrequenz-Pegeldetektor (10) hat und der Prozessor zur Ermittlung des Antennenempfangssignals (A) aus dem Ausgangssignal des Zwischenfrequenz-Pegeldetektors (10) und dem Dämpfungsfaktorsignal vorgesehen ist.

7. Funkwellen-Empfangseinrichtung (1) nach Anspruch 6, **dadurch gekennzeichnet, dass** das Ausgangssignal des Zwischenfrequenz-Pegeldetektors (10) und/oder Dämpfungsfaktorsignal analog sind und der Prozessor zur Analog-Digital-Wandlung des analogen Ausgangssignals und/oder Dämpfungsfaktorsignals vorgesehen ist.

8. Funkwellen-Empfangseinrichtung (1) nach einem der vorhergehenden Ansprüche, **dadurch gekennzeichnet, dass** der Zwischenfrequenz-Pegeldetektor (10) und/oder die Hochfrequenzdämpfungseinheit (12) einen Analog-Digital-Wandler zur Umwandlung des analogen Zwischenfrequenz-Signalstärkesignals und/oder Dämpfungsfaktorsignals hat.
